# EUROPEAN PATENT APPLICATION

(11) **EP 4 538 070 A1**
(43) Date of publication of application: **16.04.2025**
(21) Application number: 23822667.4
(22) Date of filing: 27.02.2023
(51) Int. Cl.: B60H 1/00

(54) **AIR CONDITIONING SYSTEM OF DOUBLE-DECKER VEHICLE, AND DOUBLE-DECKER VEHICLE**

(30) Priority: 13.06.2022 CN 202221482199 U
(71) Applicant: BYD Company Limited, Shenzhen, Guangdong 518118 (CN)
(72) Inventor: HUANG, Yuting, Shenzhen, Guangdong 518118 (CN); JI, Xubei, Shenzhen, Guangdong 518118 (CN); PAN, Yanan, Shenzhen, Guangdong 518118 (CN); ZHAO, Shiyi, Shenzhen, Guangdong 518118 (CN); LIN, Wen, Shenzhen, Guangdong 518118 (CN)
(74) Representative: Mathys & Squire
(86) International application number: PCT/CN2023/078409
(87) International publication number: WO 2023/241095

(57) **Abstract**

A double-decker vehicle, which has an air conditioning system of the double-decker vehicle. The air conditioning system of the double-decker vehicle includes: an air conditioning box, which is configured to be arranged on a double-decker vehicle main body, wherein the air conditioning box is provided with two upper-deck air supply ports; an upper-deck main air duct, which is configured to be arranged at the top of an upper deck of the double-decker vehicle main body, wherein the upper-deck main air duct is provided with two upper-deck air inlets, and the upper-deck air supply ports and the upper-deck air inlets are staggered in a horizontal direction; and two upper-deck transition air ducts, wherein each upper-deck transition air duct is respectively in communication with one upper-deck air supply port and one upper-deck air inlet, an inner wall of the upper-deck transition air duct is in smooth transition with an inner wall of the upper-deck air supply port, and the inner wall of the upper-deck transition air duct is in smooth transition with an inner wall of the upper-deck air inlet.

## Description

### CROSS-REFERENCE TO RELATED APPLICATIONS

The present disclosure claims priority to Chinese Patent Application No. 202221482199.2, filed on November 30, 2021, and entitled "AIR CONDITIONING SYSTEM OF DOUBLE-DECKER VEHICLE, AND DOUBLE-DECKER VEHICLE", which is incorporated herein by reference in its entirety.

### FIELD

The present disclosure relates to the field of double-deck vehicle, and in particular, to an air conditioning system of double-deck vehicle and double-deck vehicle.

### BACKGROUND

At present, in order to enable a double-deck vehicle to meet the riding comfort requirements of users, an air conditioning system is often arranged in the vehicle, and air is supplied to upper and lower deck of the vehicle through the air conditioning system. Due to the relatively complex structure of the double-deck vehicle, the related art cannot meet the requirements for air supply in different vehicle areas. In the related art, in the process of supplying air to the upper deck of a vehicle through an air conditioning system, when there is a large glass area on the upper deck, the air supply effect is poor, and the air supply demand for the upper deck cannot be met.

### SUMMARY

The present disclosure is intended to provide a new technical solution for an air conditioning system of double-deck vehicle and double-deck vehicle.

According to a first aspect of the present disclosure, there is provided an air conditioning system of a double-deck vehicle, the air conditioning system of a double-deck vehicle includes:
an air conditioner box, the air conditioner box is arranged on the body of a double-deck vehicle, and the air conditioner box is provided with two upper deck air outlets;
the upper deck main air duct, which is arranged at the top of the upper deck of the double-deck vehicle body, the upper deck main air duct is provided with two upper deck air inlets, the upper deck air outlets and the upper deck air inlets are staggered in the horizontal direction;
two upper deck transition air ducts, each of which is in communication with one upper deck air outlet and one upper deck air inlet respectively;
the inner wall of the upper deck transition air duct and the inner wall of the upper deck air outlet are in smooth transition, and the inner wall of the upper deck transition air duct and the inner wall of the upper deck air inlet are in smooth transition.

In an embodiment, the cross section of the upper deck transition air duct is rectangular, and the minimum curvature radius of each of four corners of the rectangle is 25mm;
the upper deck transition air duct includes a first pipe section, a second pipe section and a third pipe section which are sequentially communicated, the first pipe section is in communication with the upper deck air outlet, and the third pipe section is in communication with the upper deck air inlet;
the first pipe section is provided with a first arc-shaped pipe wall and a second arc-shaped pipe wall, the first arc-shaped pipe wall and the second arc-shaped pipe wall are arranged oppositely, the minimum curvature radius of the first arc-shaped pipe wall is 6mm, the minimum curvature radius of the second arc-shaped pipe wall is 382mm, and the bending directions of the first arc-shaped pipe wall and the second arc-shaped pipe wall face the same side;

The second pipe section is provided with a third pipe wall and a fourth pipe wall, the third pipe wall and the fourth pipe wall are arranged oppositely, the third pipe wall includes a third arc-shaped pipe wall located on one side of the first pipe section and a first straight pipe wall located on one side of the third pipe section, the minimum curvature radius of the third arc-shaped pipe wall is 78mm, the third arc-shaped pipe wall offsets towards the direction away from the fourth arc-shaped pipe wall, the maximum angle offset of the third arc-shaped pipe wall is 11° , and the dimension of the third arc-shaped pipe wall in the direction of angular offset is 50mm; the fourth pipe wall includes a fourth arc-shaped pipe wall located on one side of the third pipe section and a second straight pipe wall located on one side of the first pipe section, the minimum curvature radius of the fourth arc-shaped pipe wall is 746mm, the fourth arc-shaped pipe wall offsets towards the direction away from the third arc-shaped pipe wall, and the maximum angle offset of the fourth arc-shaped pipe wall is 4° ;
the third pipe section is provided with a fifth arc-shaped pipe wall and a sixth arc-shaped pipe wall, the minimum curvature radius of the fifth arc-shaped pipe wall is 170mm, the minimum curvature radius of the sixth arc-shaped pipe wall is 73mm, and the bending directions of the fifth arc-shaped pipe wall and the sixth arc-shaped pipe wall face the same side.

In an embodiment, the two upper transition air ducts are symmetrically arranged;
The concave surfaces of the first arc-shaped pipe wall and the second arc-shaped pipe wall face towards the region between the two upper deck transition air ducts, the concave surface of third arc-shaped pipe wall faces towards the region between the two upper deck transition air ducts, the fourth arc-shaped pipe wall offsets towards the outer side of the two upper deck transition air ducts in the direction from one side of the third pipe section to one side of the first pipe section, the fifth arc-shaped pipe wall and the sixth arc-shaped pipe wall bent towards the interior of the double-deck vehicle body, the concave surfaces of the fifth arc-shaped pipe wall and the sixth arc-shaped pipe wall face towards the interior of the double-deck vehicle body.

In an embodiment, a communication part of the first pipe section and the upper deck air outlet has a first cross-sectional area, a communication part of the second pipe section and the first pipe section has a second cross-sectional area, a communication part of the third pipe section and the second pipe section has a third cross-sectional area, and a communication part of the third pipe section and the upper deck air inlet has a fourth cross-sectional area;
Wherein 55%-70% of the first cross-sectional area is equal to the second cross-sectional area, 85%-95% of the second cross-sectional area is equal to the third cross-sectional area, and 85%-95% of the third cross-sectional area is equal to the fourth cross-sectional area.

In an embodiment, the upper deck main air duct corresponds to the distribution of upper deck seats on the body of the double-deck vehicle, the upper deck main air duct includes two upper deck side air ducts corresponding to the seats on both sides of the upper deck, each upper deck side air duct is in communication with one of the upper deck transition air ducts, and the two upper deck side air ducts are provided with the first upper deck air vents corresponding to the seats on both sides of the upper deck;
the two upper deck side air ducts include a first upper deck side air duct and a second upper deck side air duct, the first upper deck side air duct is located on one side where stairs of the double-deck vehicle body are located, the first upper deck air vent in the first upper deck side air duct is staggered with the region where the stair of the double-deck vehicle body are located, in the second upper deck side air duct, where in the opposite region of the double-deck vehicle body stairs, there is a second upper deck air vent between adjacent first upper deck air vents.

In an embodiment, the upper deck main air duct further includes an upper deck front air duct corresponding to the upper deck front seat, the upper deck front air duct is in communication with the two upper deck side air ducts, the upper deck front air duct is an annular air duct, an upper deck front air vent is arranged on the annular air duct, and the upper deck front air vent is a first adjustable air vent.

In an embodiment, the distance between the first upper deck air vent and the corresponding passenger face region on the seat in the front to rear direction of the double-deck vehicle body is 180mm-250mm.

In an embodiment, the air conditioning system further includes a cab air duct and an evaporator;
the evaporator is in communication with the air conditioner box, the evaporator is provided with a cab return air vent facing the cab, the evaporator is in communication with the cab air duct, the cab air duct extends to the top of the cab, and the cab air duct is provided with a second adjustable air vent.

In an embodiment, the air conditioning system further includes two lower deck transition air ducts and two lower deck main air ducts, the air conditioner box is provided with two lower deck air outlets, the two lower deck main air ducts are respectively in communication with one lower deck air outlet through one lower deck transition air duct, and the lower deck main air duct is provided with the first lower deck air vent corresponding to the lower deck seats;
the lower deck main air duct used for being arranged on one side of the door of the double-deck vehicle body is provided with a second lower deck air vent corresponding to the door, and the second lower deck air vent includes one to three rows of strip-shaped air vents.

In an embodiment, the air conditioning system further includes an upper deck return air duct, the upper deck return air duct is in communication with the air conditioner box, the upper deck return air duct is provided with an upper deck return air vent, and the upper deck return air vent is located in the bottom area of the rear side of the upper deck of the double-deck vehicle body.

In an embodiment, the air conditioning system further includes a lower deck return air duct, the lower deck return air duct is communicated with the upper deck return air duct, the lower deck return air duct is provided with a lower deck return air vent, the lower deck return air vent is located in a rear top area of a lower deck of the double-deck vehicle body, and the lowerdeck return air vent is equipped with a vent switch device.

According to a second aspect of the present disclosure, there is provided a double-deck vehicle, the double-deck vehicle includes a double-deck vehicle body, the double-deck vehicle body is equipped with the air conditioning system of the double-deck vehicle as the first aspect.

The present disclosure provides that each upper deck transition air duct is respectively in communication with an upper deck air outlet and an upper deck air inlet; the inner wall of the upper deck transition air duct and the inner wall of the upper air outlet are in smooth transition, the inner wall of the upper deck transition air duct and the inner wall of the upper deck air inlet are in smooth transition, smooth transition can avoid the problems of pressure loss and uneven air speed during the process of air supply from the air conditioner box entering the upper deck main air duct, reduce the resistance of the upper deck transition air duct to the air supply from the air conditioner box to the upper deck main air duct, increase the air supply volume, improve the air supply efficiency of the air conditioning system, and make the air speed sent into the car through the upper deck main air duct uniform, reducing noise.

Other features and advantages of the present disclosure will become clear through the detailed description of the exemplary embodiments of the present disclosure with reference to the accompanying drawings.

### BRIEF DESCRIPTION OF THE DRAWINGS

The drawings, which form a part of the description, describe embodiments of the present disclosure and, together with the description, are used to explain the principles of the present disclosure.
FIG. 1 is a first schematic structural diagram of an air conditioning system according to an embodiment of the present disclosure;
FIG. 2 is a second schematic structural diagram of an air conditioning system according to an embodiment of the present disclosure;
FIG. 3 is the bottom schematic view of an upper deck main air duct of an air conditioning system according to an embodiment of the present disclosure;
FIG. 4 is the side schematic view of an air conditioning system according to an embodiment of the present disclosure;
FIG. 5 is a partial enlarged schematic diagram;
FIG. 6 is the bottom schematic view of a lower deck main air duct of an air conditioning system according to an embodiment of the present disclosure; and
FIG. 7 is a schematic structural diagrams of a double-deck vehicle according to an embodiment of the present disclosure.

### Explanation on reference numerals:

1. air conditioner box; 10. skylight viewing glass; 20. skylight side viewing glass; 30. rear viewing glass; 5. condensing air sector;
2. lower deck main air duct; 21. lower deck transition duct; 23. stairs area;
31.upper deck transition duct; 311.first pipe section; 312.second pipe section; 313. third pipe section; 3111. first arc-shaped pipe wall; 3112.second arc-shaped pipe wall; 3121. third arc-shaped pipe wall; 3122.fourth arc-shaped pipe wall; 3123.first straight pipe wall; 3124.second straight pipe wall; 3131.fifth arc-shaped pipe wall; 3132.sixth arc-shaped pipe wall;
32. upper deck main air duct; 331. first upper deck side air duct; 332. second upper deck side air duct; 34. upper deck front air duct; 35. First upper deck side air duct in the opposite region of the double-deck vehicle body stairs;
40. vent switch device; 41. lower deck return air vent; 42. lower deck return air duct; 43. upper deck return air vent; 44. upper deck return air duct ;
61. evaporator; 62. cab return air vent; 63. cab air duct;
71. lower deck corridor air vent; 72.second adjustable air vent; 73. lower deck window air vent; 74. second lower deck air vent;
81.second upper deck air vent; 82.first adjustable air vent; 83.upper deck window air vent; 84. upper deck corridor air vent.

### DETAILED DESCRIPTION

Various exemplary embodiments of the present disclosure will now be described in detail with reference to the accompanying drawings. It should be noted that: unless specifically stated otherwise, the relative arrangement of the components and steps, the numerical expressions, and numerical values set forth in these embodiments do not limit the scope of the present disclosure.

The following description of at least one exemplary embodiment is merely illustrative in nature and is in no way intended to limit the present disclosure, its application, or uses.

Techniques and apparatus known to those of ordinary skill in the relevant art may not be discussed in detail, but are intended to be considered a part of the specification where appropriate.

In all examples shown and discussed herein, any particular value should be construed as exemplary only and not as limiting. Thus, other examples of the exemplary embodiments may have different values.

It should be noted that: like reference numbers and letters refer to like items in the following figures, and thus, once an item is defined in one figure, further discussion thereof is not required in subsequent figures.

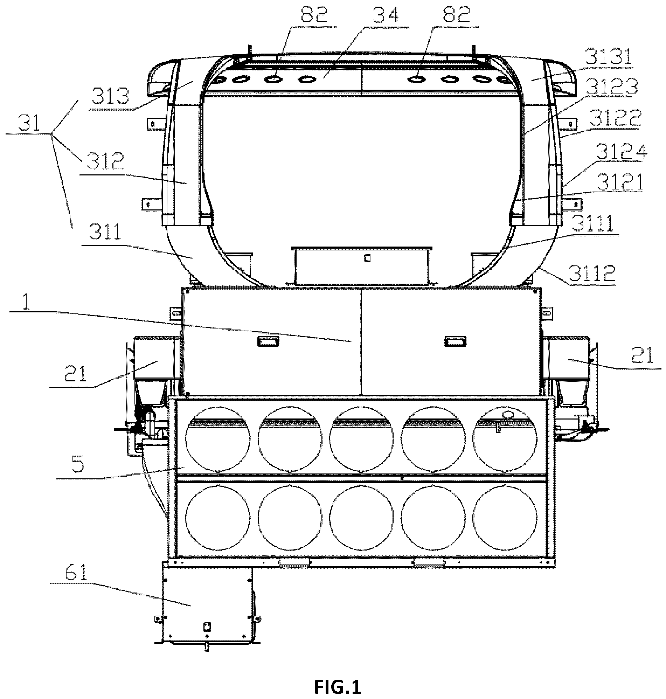

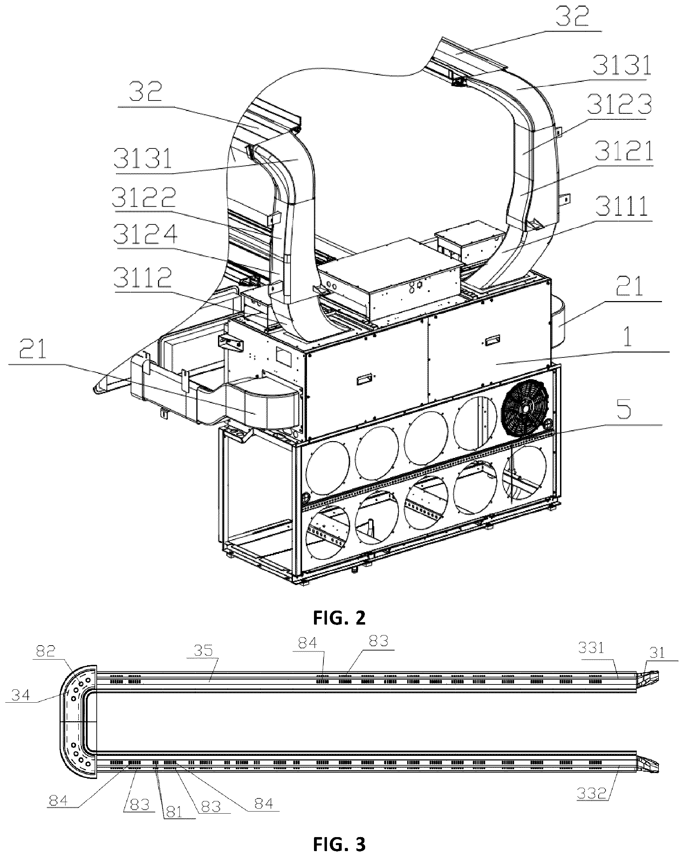

According to an embodiment of the present disclosure, there is provided an air conditioning system of a double-deck vehicle, as shown in fig. 1 to 7, including:
an air conditioner box 1, the air conditioner box 1 is arranged on the body of a double-deck vehicle, and the air conditioner box 1 is provided with two upper deck air outlets;
an upper deck main air duct 32, which is arranged at the top of the upper deck of the double-deck vehicle body, the upper deck main air duct 32 is provided with two upper deck air inlets, the upper deck air outlets and the upper deck air inlets are staggered in the horizontal direction;
two upper deck transition air ducts 31, each of which is in communication with one upper deck air outlet and one upper deck air inlet respectively;
the inner wall of the upper deck transition air duct 31 and the inner wall of the upper deck air outlet are in smooth transition, and the inner wall of the upper deck transition air duct 31 and the inner wall of the upper deck air inlet are in smooth transition. The upper deck air outlet is an outlet of the duct, that supplies air from air conditioner box 1 to the upper deck transition air duct 31, and the inner wall of the upper deck air outlet refers to the inner wall of the duct. The inner wall of the upper deck air inlet is the inner wall of the upper deck main air duct 32. Smooth transition makes the inner surface of the pipeline communication part smooth, and the inner surface of the pipeline is streamlined.

In the embodiment of the present disclosure, each upper deck transition air duct 31 is in communication with one upper deck air outlet and one upper deck air inlet respectively. The inner wall of the upper deck transition air duct 31 and the inner wall of the upper deck air outlet are in smooth transition, which can avoid energy loss caused by the formation of internal vortices in the upper deck transitional air duct 31 when the air conditioner box 1 supplies air to the upper deck transitional air duct 31. The inner wall of the upper deck transition air duct 31 and the inner wall of the upper deck air inlet are in smooth transition, which can avoid energy loss caused by the formation of internal vortices in the upper deck main air duct 32 when the air in the upper deck transition air duct 31 enters the upper deck main air duct 32. It is beneficial to increase the air speed of the vent of the upper deck main air duct 32.

Smooth transition can avoid the problem of pressure loss and the uneven wind speed during the process of air supply from air conditioner box 1 entering the upper deck main air duct 32, reduce the resistance of the upper deck transition air duct 31 to the air supply from air conditioner box 1 to the upper deck main air duct 32, increase the air supply volume, improve the air supply efficiency of the air conditioning system, and make the air speed sent into the car through the upper deck main air duct 32 uniform and reduce noise.

In an embodiment, the air conditioner box 1 may be provided on the rear side or the front side of the double-deck vehicle body. Under the condition that the air conditioner box 1 is provided on the rear side of the double-deck vehicle body, the air conditioner box 1 is in communication with the upper deck transition air duct 31 through an upper deck air outlet. The upper deck air inlet is positioned at the rear side of the double-deck vehicle body. Under the condition that the air conditioner box is arranged on the front side of the double-deck vehicle body, the upper deck air inlet is positioned on the front side of the double-deck vehicle body.

In an embodiment, a condensing air sector 5 is provided below the air conditioner box 1, and the condensing air sector 5 is used for cooling the air conditioner box 1 and the evaporator 61 behind the driver.

The cross-sectional area of the air duct on one side of the upper deck main air duct 32A(m²) ≥ the air output of the air conditioning system to one side of the upper deck air outlet Q(m³/s) ÷ 5.5, which maximizes the utilization of the air conditioning system's cavity. There are no electrical components such as speakers in the upper deck main air duct 32. The pipeline is concentrated in the area farthest from the vent of the upper deck main air duct 32 using a wire harness. The inner side of the upper deck main air duct 32 is covered with insulation cotton, and the smoothness of the upper deck main air duct 32 is taken into account to avoid vortices in the flow field inside the upper deck main air duct 32 and reduce flow resistance.

In an embodiment, as shown in fig. 1-5, the cross section of the upper deck transition air duct 31 is rectangular, and the minimum curvature radius of each of four corners of the rectangle is 25mm;
the upper transition air duct 31 includes a first pipe section 311, a second pipe section 312 and a third pipe section 313, which are sequentially communicated, the first pipe section 311 is in communication with the upper deck air outlet, and the third pipe section 313 is in communication with the upper deck air inlet;

The first pipe section 311 is provided with a first arc-shaped pipe wall 3111 and a second arc-shaped pipe wall 3112, the first arc-shaped pipe wall 3111 and the second arc-shaped pipe wall 3112 are arranged oppositely, the minimum curvature radius of the first arc-shaped pipe wall 3111 is 6mm, the minimum curvature radius of the second arc-shaped pipe wall 3112 is 382mm, and the bending directions of the first arc-shaped pipe wall 3111 and the second arc-shaped pipe wall 3112 face the same side;
the second pipe section 312 is provided with a third pipe wall and a fourth pipe wall, the third pipe wall and the fourth pipe wall are arranged oppositely, the third pipe wall includes a third arc-shaped pipe wall 3121 located on one side of the first pipe section 311 and a first straight pipe wall 3123 located on one side of the third pipe section 313, the minimum curvature radius of the third arc-shaped pipe wall 3121 is 78mm, the third arc-shaped pipe wall 3121 offsets towards the direction away from the fourth arc-shaped pipe wall 3122,the maximum angle offset of the third arc-shaped pipe wall 3121 is 11° , and the dimension of the third arc-shaped pipe wall 3121 in the direction of angular offset is 50mm; the offset of the third arc-shaped pipe wall 3121 forms a concave structure consistent with the characteristics of the fluid on the upper deck transition air duct 31, so as to avoid forming low-speed vortices in the upper deck transition air duct 31.

The fourth pipe wall includes a fourth arc-shaped pipe wall 3122 located on one side of the third pipe section 313 and a second straight pipe wall 3124 located on one side of the first pipe section 311, the minimum curvature radius of the fourth arc-shaped pipe wall 3122 is 746mm, the fourth arc-shaped pipe wall 3122 offsets towards the direction away from the third arc-shaped pipe wall 3121 , and the maximum angle offset of the fourth arc-shaped pipe wall 3122 is 4° ;
the third pipe section 313 is provided with a fifth arc-shaped pipe wall 3131 and a sixth arc-shaped pipe wall 3132, the minimum curvature radius of the fifth arc-shaped pipe wall 3131is 170mm, the minimum curvature radius of the sixth arc-shaped pipe wall 3132 is 73mm, and the bending directions of the fifth arc-shaped pipe wall 3131 and the sixth arc-shaped pipe wall 3132 face the same side. The structure of the third pipe section 313 effectively reduces the resistance of the air entering the upper deck main air duct 32 from the upper deck transition air duct 31, and compared with the related art, the resistance of the air entering the upper deck main air duct 32 is reduced by at least 23%. The present disclosure effectively enables the air entering the upper deck main air duct 32 to flown out at a uniform speed from the upper deck air outlet of the upper deck main air duct 32, ensuring the uniformity of the wind speed entering the vehicle and avoiding the problem of wind resistance caused by adjusting the wind speed using air outlet covers and other methods.

In an embodiment of the present disclosure, the first pipe section 311, the second pipe section 312, and the third pipe section 313 form the upper deck transition air duct 31 with a streamline structure, so that the inner wall of the upper deck transition air duct 31 is attached to the flowing trend of the fluid, the vortices in the cavity and energy loss are effectively reduced, the resistance of the upper deck transition air duct 31 to the wind is reduced, and the air supply efficiency of the air conditioning system is improved. The air conditioning system of the present disclosure can reduce the resistance of the upper deck transition duct 31 to wind by at least 15% relative to the related art.

The cross section of the upper deck transition air duct 31 is rectangular, four sides of the rectangle form four corners, and each corner is an arc corner with the minimum curvature radius of 25 mm. This can avoid the formation of vortices in the cavity and the energy loss between the adjacent pipe walls of the upper transition duct 31. For example, the first pipe section 311, second pipe section 312, and third pipe section 313 are each rectangular in cross-section.

For example, the first pipe section 311 further includes two pipe walls disposed oppositely, the two pipe walls are connected to the first arc-shaped pipe wall 3111 and the second arc-shaped pipe wall 3112 to form the first pipe section 311, and the cross section of the first pipe section 311 is rectangular.

For example, the second pipe section 312 further includes two pipe walls disposed oppositely, the two pipe walls are connected with the third pipe wall and the fourth pipe wall to form the second pipe section 312, and the cross section of the second pipe section 312 is rectangular.

For example, the third pipe section 313 further includes two pipe walls disposed oppositely, the two pipe walls are connected with the fifth arc-shaped pipe wall 3131 and the sixth arc-shaped pipe wall 3132 to form the third pipe section 313, and the cross section of the third pipe section 313 is rectangular.

In an embodiment, as shown in fig. 1 to 7, two upper deck transition ducts 31 are symmetrically arranged;
the concave surfaces of the first arc-shaped pipe wall 3111 and the second arc-shaped pipe wall 3112 face towards the region between the two upper deck transition air ducts 31, the concave surface of third arc-shaped pipe wall 3121 faces towards the region between the two upper deck transition air ducts 31, the fourth arc-shaped pipe wall 3122 offsets towards the outer side of the two upper deck transition air ducts 31 in the direction from one side of the third pipe section 313 to one side of the first pipe section 311, the fifth arc-shaped pipe wall 3131 and the sixth arc-shaped pipe wall 3132 bent towards the interior of the double-deck vehicle body, the concave surfaces of the fifth arc-shaped pipe wall 3131 and the sixth arc-shaped pipe wall 3132 face towards the interior of the double-deck vehicle body.

In an embodiment of the present disclosure, the two upper deck transition ducts 31 are symmetrically arranged, so as to avoid obstructing the rear viewing glass 30 of the double-deck vehicle, so as to avoid affecting the viewing of the passenger from the rear viewing glass 30.

The structures of the first arc-shaped pipe wall 3111, the second arc-shaped pipe wall 3112, the third arc-shaped pipe wall 3121, the fourth arc-shaped pipe wall 3122, the fifth arc-shaped pipe wall 3131 and the sixth arc-shaped pipe wall 3132 can ensure the streamline structure of the upper deck transition air duct 31 and make the inner wall of the upper deck transition air duct 31 fit with the flowing trend of the wind, so that the vortices in the cavity and the energy consumption loss formed by the air supply through the upper deck transition air duct 31 are effectively reduced.

In an embodiment, the first pipe section 311 has a first cross-sectional area where it communicates with the upper deck air inlet, the second pipe section 312 has a second cross-sectional area where it communicates with the first pipe section 311, the third pipe section 313 has a third cross-sectional area where it communicates with the second pipe section 312, and the third pipe section 313 has a fourth cross-sectional area where it communicates with the upper deck air inlet;
wherein 55%-70% of the first cross-sectional area is equal to the second cross-sectional area, 85%-95% of the second cross-sectional area is equal to the third cross-sectional area, and 85%-95% of the third cross-sectional area is equal to the fourth cross-sectional area.

In the embodiment of the present disclosure, the cross-sectional areas of the upper deck transition duct 31 at different positions are different, so that the streamlined upper deck transition duct 31 can effectively avoid energy loss and vortices in the cavity.

In an embodiment, the upper deck main air duct 32 corresponds to the distribution of upper deck seat on the body of the double-deck vehicle, the upper deck main air duct 32 includes two upper deck side air ducts corresponding to the seats on both sides of the upper deck, each upper deck side air duct is in communication with one of the upper deck transition air ducts 31, and the two upper deck side air ducts are provided with the first upper deck air vents corresponding to the seats on both sides of the upper deck. For example, the first upper deck air vent can be a dispersion vent or an adjustable vent.

The two upper deck side air ducts include a first upper deck side air duct 331 and a second upper deck side air duct 332, the first upper deck side air duct 331 is located on one side where stairs of the double-deck vehicle body are located, the first upper deck air vent 331 in the first upper deck side air duct is staggered with the region where the stair of the double-deck vehicle body are located, in the second upper deck side air duct332, where in the opposite region of the double-deck vehicle body stairs, there is a second upper deck air vent between adjacent first upper deck air vents 81.

In the embodiment of the present disclosure, the first upper deck air vent on the first upper deck side air duct 331 is staggered from the area where the double-deck vehicle body stairs are located, so there is no vent in the first upper deck side air duct, where is in the opposite region of the double-deck vehicle body stairs. This avoids the formation of clash when the low temperature air current of the lower deck of the vehicle flows upwards to the upper deck. And the stay time of the passengers on the stairs is short, so that the comfort of the passengers is not influenced. And the air quantity of the air vents in other areas of the upper deck main air duct 32 can be effectively improved, and the thermal comfort of passengers on the upper deck is greatly improved.

In the second upper deck side air duct 332, where in the opposite region of the double-deck vehicle body stairs, there is a second upper deck air vent 81 between adjacent first upper deck air vents. Thus, the temperature of the side and the stairs area 23 can be ensured to be uniform, and the air quantity loss of a non-passenger area is reduced while the air quantity of the seat is ensured.

In an embodiment, the first upper deck air vent includes an upper deck window air vent 83 and an upper deck corridor air vent 84, and the upper deck window air vent 83 is arranged corresponding to the upper deck window seat. For example, the upper deck window vent 83 blows air toward the upper deck window seat. The upper corridor air vent 84 is arranged corresponding to the upper deck corridor seat. For example, the upper corridor air vent 84 blows air toward the upper corridor. For example, each seat is provided with one vent. The upper deck window air vent 83 and the upper deck corridor air vent 84 can be a dispersion vent or an adjustable vent.

In an embodiment, the distance between the first upper deck air vent and the corresponding passenger face region on the seat in the front to rear direction of the double-deck vehicle body is 180mm-250mm.

For example, the front to rear direction of the vehicle is the X-axis direction, and the axial distance in the X-axis between the first upper deck air vent and the corresponding passenger face region on the seat is 180mm to 250mm. The distance between the center of the air vent of each first upper deck air vent and the face of a passenger is kept between 180mm and 250mm, and the comfort of the passenger is guaranteed. The position of the face of the occupant in the seat is the position of the face of the occupant when seated in the seat in the correct sitting position.

The upper deck window air vent 83 blows air to the window seat, and passenger at the upper deck window seat is affected by the thermal radiation from the skylight viewing glass, skylight side viewing glass, and side glass, and the distribution of the upper deck window air vent 83 in present disclosure allows the air to blow directly onto the passenger seat near the window, effectively improving the comfort of the passenger near the window. The upper deck corridor air vent 84 allows the wind to blow closer to the corridor, and the upper deck corridor air vent 84 is beneficial for reducing the temperature of the heat at the upper deck skylight and improving the uniformity of the vehicle temperature.

In an embodiment, as shown in fig. 1 to fig. 3, the upper deck main air duct 32 further includes an upper deck front air duct 34 corresponding to the upper deck front seat, the upper deck front air duct 34 is in communication with the two upper deck side air ducts, the upper deck front air duct 34 is an annular air duct, an upper deck front air vent is arranged on the annular air duct, and the upper deck front air vent is the first adjustable air vent 82. The first adjustable vent 82 is an adjustable vent.

The upper deck front side of the vehicle is provided with glass, the annular air duct can adapt to the vehicle structure of the upper deck front side, the upper deck front air vent is a first adjustable air vent 82, and the air quantity of the air vent can be adjusted through the first adjustable air vent 82, so that the thermal comfort of passenger on the upper front side is improved. For example, there are eight first adjustable air vents 82 distributed on the circular air duct. Eight first adjustable air vents 82 are symmetrically distributed on both sides of the vehicle's corridor.

Eight first adjustable air vents 82 are distributed on the annular air duct to solve the problem of high radiation heat for passengers in front and high solar radiation heat for passenger on the window side, improving passenger comfort.

In an embodiment, the cross-sectional area A (cm²) of the upper deck main air duct 32 is equal to the total area A (cm²) of the air vents on one side of the upper deck main air duct 32. For example, the cross-sectional area of the first upper deck side air duct 331 is equal to the sum of the area of the first upper deck air vent on the first upper deck side air duct 331 and half of the upper deck air vent on the upper deck front air duct 34 of the annular air duct.

In an embodiment, the air conditioning system further includes a cab air duct 63 and an evaporator 61;
the evaporator 61 is in communication with the air conditioner box 1, and the evaporator 61 can be cooled through the air conditioner box 1. The evaporator 61 is equipped with a cab return air vent 62 facing the cab, the evaporator 61 is in communication with a cab air duct 63, the cab air duct 63 extends to the top of the cab, and the cab air duct 63 is provided with a second adjustable air vent 72.

The air inside the cab enters the evaporator 61 through the cab return air vent 62, cools down, and is sent into the cab air duct 63, and then blows towards the cab through the second adjustable air vent 72.

For example, the air blown towards the driver's cabin through the second adjustable air vent 72 is directed towards the driver's head.

The cabin air duct 63 is equipped with multiple second adjustable air vents 72, and the second adjustable air vent 72 located in the middle area is 190mm-210mm away from the driver's nose tip in the X-axis direction. This can ensure the thermal comfort of the driver's area and solve the problem of the lower deck main air duct 2 being cut off by the stairs area 23 and unable to supply air to the cab.

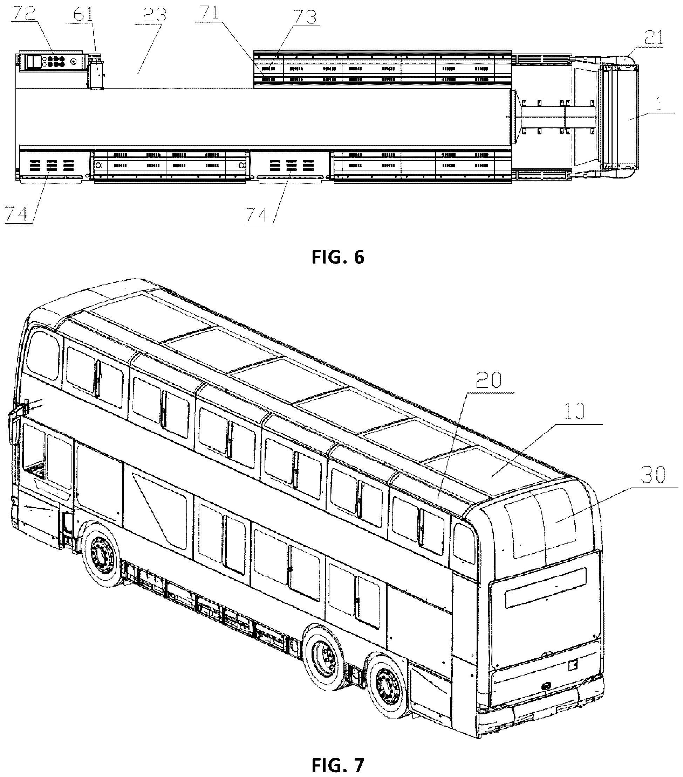

In an embodiment, as shown in Fig. 6, the air conditioning system further includes two lower deck transition air ducts 21 and two lower deck main air ducts 2. The air conditioner box 1 has two lower deck air outlets, and the two lower deck main air ducts 2 are respectively in communication with one lower deck air outlet through one lower deck transition air duct 21. The lower deck main air duct 2 is provided with a first lower deck air vent corresponding to the lower deck seat;
a second lower deck air vent (74) corresponding to the door located on the lower deck main air duct (2) located on one side of the vehicle door, the second lower deck air vent (74) comprises one to three rows of strip-shaped air vents.

In an embodiment of present disclosure, the first lower deck air vent supplies air to the lower deck seats. For example, the lower deck side air vent includes a lower deck window air vent 73 corresponding to the lower deck window seat, and a lower deck corridor air vent 71 corresponding to the lower deck corridor seat. The lower deck window air vent 73 and the lower deck corridor air vent 71 can be a dispersion vent or an adjustable vent. The air from the lower deck window vent 73 blows to the lower deck passenger seat, while the air from the lower deck corridor vent 71 blows to the lower corridor, providing good comfort for both standing and sitting passengers.

The second lower deck air vent 74 includes one to three rows of strip-shaped air vents, which can form an air curtain with a certain temperature difference and uniform flow velocity distribution at the car door, allowing passengers to feel cool as soon as they enter the car in summer, improving passenger thermal comfort.

In an embodiment, the cross-sectional area A (cm²) of the lower deck main air duct 2 set on the side of the vehicle door is equal to the total area A (cm²) of the lower deck window air duct 73, lower deck corridor air duct 71, and second lower deck air duct 74 set on the lower deck main air duct 2 set on the side of the vehicle door.

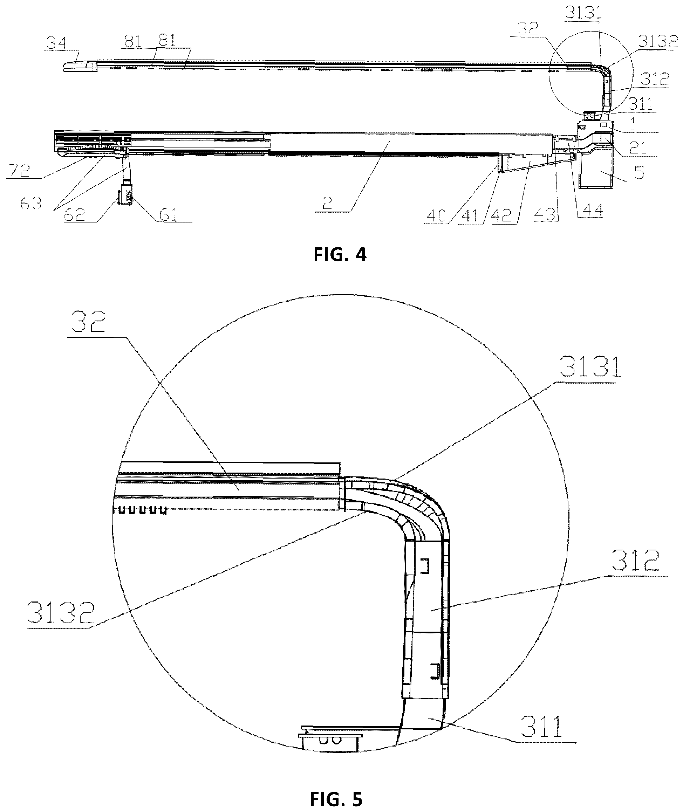

In an embodiment, as shown in Fig. 4, the air conditioning system further includes an upper deck return air duct 44, which is connected to the air conditioner box 1. The upper deck return air duct 44 has an upper deck return air vent 43 located in the rear bottom area of the upper deck of the double-deck vehicle body.

As shown in Fig. 7, when the area of the upper deck skylight viewing glass 10 and the skylight side viewing glass 20 of a double-deck vehicle is large and the heat is high in summer, the upper deck return air vent 43 is set in the rear bottom area of the upper deck of the vehicle, so that the lower temperature return air flows from the stairs area 23 to the upper deck return air vent 43, and then back to the air conditioner box 1, which can further reduce the temperature of the upper deck of the vehicle. The embodiment of the present disclosure is applicable to double-deck vehicle with large skylight glass area and high air conditioning system load on the upper deck.

In an embodiment, as shown in Fig. 4, the air conditioning system further includes a lower deck return air duct 42, which is in communication with an upper deck return air duct 44. The lower deck return air duct 42 has a lower deck return air vent 41, which is located in the rear top area of the lower deck of the vehicle. The lower deck return air vent 41 is equipped with an air vent switch device 40.

The opening and closing of the lower deck return air vent 41 can be controlled by the vent switch device 40. According to the temperature situation of the upper deck, the lower deck return air vent 41 can be selected to be opened, and the lower deck return air duct 42 can be connected to the upper deck return air duct 44, so that the return air can be sent back to the air conditioner box 1 together from the upper deck return air duct 44.

According to another embodiment of the present disclosure, a double-deck vehicle is provided, including a double-deck vehicle body equipped with an air conditioning system of the double-deck vehicle as set forth in any one of the embodiments of the present disclosure.

The double-deck vehicle has the technical effects brought by the air conditioning system of the double-deck vehicle in the embodiments of the disclosure.

The vehicles in the present disclosure are all double-deck vehicles in present disclosure.

In the above embodiments, the differences between the embodiments are described in emphasis, and different optimization features between the embodiments can be combined to form a better embodiment as long as the differences are not contradictory, and further description is omitted here in consideration of brevity of the text.

Although some specific embodiments of the present disclosure have been described in detail by way of illustration, it should be understood by those skilled in the art that the above illustration is only for purposes of illustration and is not intended to limit the scope of the present disclosure. It will be appreciated by those skilled in the art that modifications may be made to the above embodiments without departing from the scope and spirit of the present disclosure. The scope of the present disclosure is defined by the appended claims.

## Claims

1. An air conditioning system of a double-deck vehicle, comprising:
an air conditioner box (1), which is arranged on the body of the double-deck vehicle, and the air conditioner box (1) is provided with two upper deck air outlets;
an upper deck main air duct (32), which is arranged at the top of the upper deck of the double-deck vehicle body, the upper deck main air duct (32) is provided with two upper deck air inlets, the upper deck air outlets and the upper deck air inlets are staggered in the horizontal direction;
two upper deck transition air ducts (31), each of the upper deck transition air ducts (31) is in communication with one upper deck air outlet and one upper deck air inlet respectively;
the inner wall of the upper deck transition air duct (31) and the inner wall of the upper deck air outlet are in smooth transition, and the inner wall of the upper deck transition air duct (31) and the inner wall of the upper deck air inlet are in smooth transition.

2. The air conditioning system of a double-deck vehicle according to claim 1, wherein a cross section of the upper deck transition air duct (31) is rectangular, and a minimum curvature radius of each of four corners of the rectangle is 25mm;
the upper deck transition air duct (31) comprises a first pipe section (311), a second pipe section (312) and a third pipe section (313), which are sequentially communicated, the first pipe section (311) is in communication with the upper deck air outlet, and the third pipe section (313) is in communication with the upper deck air inlet;
the first pipe section (311) is provided with a first arc-shaped pipe wall (3111) and a second arc-shaped pipe wall (3112), the first arc-shaped pipe wall (3111) and the second arc-shaped pipe wall (3112) are arranged oppositely, the minimum curvature radius of the first arc-shaped pipe wall (3111) is 6mm, the minimum curvature radius of the second arc-shaped pipe wall (3112) is 382mm, and bending directions of the first arc-shaped pipe wall (3111) and the second arc-shaped pipe wall (3112) face the same side;
the second pipe section (312) is provided with a third pipe wall and a fourth pipe wall, the third pipe wall and the fourth pipe wall are arranged oppositely, the third pipe wall comprises a third arc-shaped pipe wall (3121) located on one side of the first pipe section (311) and a first straight pipe wall (3123) located on one side of the third pipe section (313), the minimum curvature radius of the third arc-shaped pipe wall (3121) is 78mm, the third arc-shaped pipe wall (3121) offsets towards the direction away from the fourth arc-shaped pipe wall, the maximum angle offset of the third arc-shaped pipe wall (3121) is 11° , and the dimension of the third arc-shaped pipe wall (3121) in the direction of angular offset is 50mm; the fourth pipe wall comprises a fourth arc-shaped pipe wall (3122) located on one side of the third pipe section (313) and a second straight pipe wall (3124) located on one side of the first pipe section (311), the minimum curvature radius of the fourth arc-shaped pipe wall (3122) is 746mm, the fourth arc-shaped pipe wall (3122) offsets towards the direction away from the third arc-shaped pipe wall, and the maximum angle offset of the fourth arc-shaped pipe wall (3122) is 4° ;
the third pipe section (313) is provided with a fifth arc-shaped pipe wall (3131) and a sixth arc-shaped pipe wall (3132), the minimum curvature radius of the fifth arc-shaped pipe wall (3131) is 170mm, the minimum curvature radius of the sixth arc-shaped pipe wall (3132) is 73mm, and bending directions of the fifth arc-shaped pipe wall (3131) and the sixth arc-shaped pipe wall (3132) face the same side.

3. The air conditioning system of a double-deck vehicle according to claim 2, wherein the two upper transition air ducts (31) are symmetrically arranged;
concave surfaces of the first arc-shaped pipe wall (3111) and the second arc-shaped pipe wall (3112) face towards the region between the two upper transition air ducts (31), concave surface of third arc-shaped pipe wall (3121) faces towards the region between the two upper transition air ducts (31), the fourth arc-shaped pipe wall (3122) offsets towards the outer side of the two upper transition air ducts (31) in the direction from one side of the third pipe section (313) to one side of the first pipe section (311), the fifth arc-shaped pipe wall (3131) and the sixth arc-shaped pipe wall (3132) bend towards the interior of the double-deck vehicle body, concave surfaces of the fifth arc-shaped pipe wall (3131) and the sixth arc-shaped pipe wall (3132) face towards the interior of the double-deck vehicle body.

4. The air conditioning system of a double-deck vehicle according to claim 2, wherein a communication part of the first pipe section (311) and the upper deck air outlet has a first cross-sectional area, a communication part of the second pipe section (312) and the first pipe section (311) has a second cross-sectional area, a communication part of the third pipe section (313) and the second pipe section (312) has a third cross-sectional area, and a communication part of the third pipe section (313) and the upper deck air inlet has a fourth cross-sectional area;
wherein 55%-70% of the first cross-sectional area is equal to the second cross-sectional area, 85%-95% of the second cross-sectional area is equal to the third cross-sectional area, and 85%-95% of the third cross-sectional area is equal to the fourth cross-sectional area.

5. The air conditioning system of a double-deck vehicle according to claim 1, wherein the upper deck main air duct (32) corresponds to the distribution of seats on the upper deck of the double-deck vehicle body, the upper deck main air duct (32) comprises two upper deck side air ducts corresponding to the seats on both sides of the upper deck, each upper deck side air duct is in communication with one of the upper deck transition air ducts (31), and the two upper deck side air ducts are provided with a first upper deck air vents corresponding to the seats on both sides of the upper deck;
the two upper deck side air ducts comprises a first upper deck side air duct (331) and a second upper deck side air duct (332), the first upper deck side air duct (331) is located on one side where stairs of the double-deck vehicle body are located, the first upper deck air vent in the first upper deck side air duct (331) is staggered with the region where the stair of the double-deck vehicle body are located, and a second upper deck air vent (81) is arranged between adjacent first upper deck air vents in the area, opposite to the double-deck vehicle body stairs, of the second upper deck side air duct (332).

6. The air conditioning system of a double-deck vehicle according to claim 5, wherein the upper deck main air duct (32) further comprises an upper deck front air duct (34) corresponding to the upper deck front seat, the upper deck front air duct (34) is in communication with the two upper deck side air ducts, the upper deck front air duct (34) is an annular air duct, an upper deck front air vent is arranged on the annular air duct, and the upper deck front air vent is the first adjustable air vent (82).

7. The air conditioning system of a double-deck vehicle according to claim 5, wherein the distance between the first upper deck air vent and corresponding passenger face area on the seat is 180mm-250mm in the front-rear direction of the double-deck vehicle body.

8. The air conditioning system of a double-deck vehicle according to claim 1, wherein the air conditioning system further comprises a cab air duct (63) and an evaporator (61);
the evaporator (61) is in communication with the air conditioner box (1), the evaporator (61) is equipped with a cab return air vent (62) facing the cab, the evaporator (61) is in communication with a cab air duct (63), the cab air duct (63) extends to the top of the cab, and the cab air duct (63) is provided with a second adjustable air vent (72).

9. The air conditioning system of a double-deck vehicle according to claim 1, wherein the air conditioning system further comprises two lower deck transition air ducts (21) and two lower deck main air ducts (2), the air conditioner box (1) has two lower deck air outlets, and the two lower deck main air ducts (2) are respectively connected to one lower deck air outlet through one lower deck transition air duct (21), the lower deck main air duct (2) is provided with a first lower deck air vent corresponding to the lower deck seat;
a second lower deck air vent (74) corresponding to the door located on the lower deck main air duct (2) located on one side of the vehicle door, the second lower deck air vent (74) comprises one to three rows of strip-shaped air vents.

10. The air conditioning system of a double-deck vehicle according to claim 1, wherein the air conditioning system further comprises an upper deck return air duct (44) connected to the air conditioner box (1), the upper deck return air duct (44) has an upper deck return air vent (43) located in the rear bottom area of the upper deck of the double-deck vehicle body.

11. The air conditioning system of a double-deck vehicle of claim 10 further comprising a lowerdeck return air duct (42) communicated with the upper-deck return air duct (44), the lower deck return air duct (42) is provided with a lower deck return air vent (41), the lower deck return air vent (41) is located in a rear top area of a lower deck of the double- deck vehicle body, and the lower deck return air vent (41) is equipped with a vent switch device (40).

12. A double-deck vehicle, comprising: a double-deck vehicle body, which is provided with an air conditioning system of the double-deck vehicle according to any one of claims 1 to 11.
